# EUROPEAN PATENT APPLICATION

(11) **EP 2 092 963 A1**
(43) Date of publication of application: **26.08.2009**
(21) Application number: 09250449.7
(22) Date of filing: 20.02.2009
(51) Int. Cl.: A62C 2/10, B32B 5/24, B32B 27/24

(54) **Flexible fire retardant material**

(30) Priority: 21.02.2008 GB 0803132
(71) Applicant: Intumescent Systems Limited, Barfreston Dover Kent CT15 7JG (GB)
(72) Inventor: Ward, Derek Alfred, Dover, Kent CT15 7JG (GB)
(74) Representative: Sayer, Robert David

(57) **Abstract**

A flexible fire retardant sheet for use *inter alia* as a curtain, the sheet comprising a sheet of flexible fibrous material coated on one or both sides with a solution containing an intumescent material, and one or more flexible sheets of siliconised cloth material adhered to each face of the sheet of fibrous material.

## Description

This invention relates to flexible fire retardant material and more especially, but not exclusively, to fire curtains made from such material.

Drop curtains used to prevent the spread of flames are well known. One example of such a curtain is to be found in published application GB2478737.

One object of this invention is to provide a sheet material for a drop curtain having enhanced flame resistance and fire retardant properties.

In one aspect, the invention provides a flexible fire retardant sheet for use *inter alia* as a curtain, the sheet comprising a sheet of flexible fibrous material coated on one or both sides with a solution containing an intumescent material, and flexible sheets of siliconised cloth material adhered to each face of the sheet of fibrous material.

The sheet of fibrous material typically comprises a paprous sheet and the coating may be applied by a dipping process or by physically coating each side of the paprous sheet.

The intumescent material may be graphite-based.

The following embodiment of this invention is given by way of example only. The embodiment concerns a fire curtain.

A sheet of a fibrous paper is cut to the required width and length and then coated on each planar surface with a liquid containing an intumescent material. Similarly sized silica cloth material is then adhered to each planar surface of the fibrous paper sheet and the finished cloth is then allowed to set

Fire retardant cloth in accordance with this invention had sufficient flexibility to be wound around a curtain roller without suffering any damage. The cloth is fire retardant for periods in excess of 60 minutes when subjected to fire.

It will be appreciated that the foregoing is merely exemplary of fire retardant cloths in accordance with this invention and that modifications can readily be made thereto without departing from the true scope of the invention.

## Claims

1. A flexible fire retardant sheet for use *inter alia* as a curtain, the sheet comprising a sheet of flexible fibrous material coated on one or both sides with a solution containing an intumescent material, and one or more flexible sheets of siliconised cloth material adhered to each face of the sheet of fibrous material.

2. A sheet as claimed in claim 1, wherein the flexible fibrous material comprises a paprous sheet.

3. A sheet as claimed in claim 1 or claim 2, wherein the coating is applied by a dipping process.

4. A sheet as claimed in any one of the preceding claims, wherein the intumescent material is graphite-based.
